(19) Europäisches Patentamt
European Patent Office
Office européen des brevets

(11) Veröffentlichungsnummer: **0 293 807 A2**

# (12) EUROPÄISCHE PATENTANMELDUNG

(21) Anmeldenummer: 88108627.6

(51) Int. Cl.4: C09B 67/24 , D06P 1/39

(22) Anmeldetag: 30.05.88

(30) Priorität: 03.06.87 CH 2096/87

(43) Veröffentlichungstag der Anmeldung: 07.12.88 Patentblatt 88/49

(84) Benannte Vertragsstaaten: CH DE FR GB IT LI

(71) Anmelder: **CIBA-GEIGY AG**
**Klybeckstrasse 141**
**CH-4002 Basel(CH)**

(72) Erfinder: **Tempel, Ernst, Dr.**
**Kilchgrundstrasse 45**
**CH-4125 Riehen(CH)**

(74) Vertreter: **Dipl.-Ing. Schwabe, Dr. Dr. Sandmair, Dr. Marx**
**Stuntzstrasse 16**
**D-8000 München 80(DE)**

## (54) Feste Formulierung von anionischen Farbstoffen.

(57) Feste Formulierung enthaltend mindestens einen wasserlöslichen anionischen Farbstoff, gegebenenfalls weitere Hilfsmittel, und eine Kombination aus einem ethoxylierten Stearyl-diphenyloxethyl-diethylentriamin und mindestens einen anionischen Dispergator; derartige Formulierungen sind vor allem ausgezeichnet durch ein sehr gutes Heisslöseverhalten in Wasser.

EP 0 293 807 A2

Xerox Copy Centre

# Feste Formulierung von anionischen Farbstoffen

Die Erfindung betrifft eine feste Formulierung von anionischen Farbstoffen, ein Verfahren zu deren Herstellung und deren Verwendung zur Herstellung von wässrigen Färbebädern, Klotzflotten und Druckpasten zum Färben und Bedrucken von Textilmaterial, insbesondere von Wolle- und Polyamidmaterialien.

Es wurde gefunden, dass sich das Heisslöseverhalten von festen Formulierungen wasserlöslicher anionischer Farbstoffe in Wasser überraschenderweise durch das Vorliegen bestimmter Dispergatoren in Kombination mit einem ethoxylierten Stearyl-diphenyloxethyl-diethylentriamin stark verbessern lässt.

Gegenstand der vorliegenden Erfindung ist somit eine feste Formulierung, enthaltend mindestens einen wasserlöslichen anionischen Farbstoff und gegebenenfalls weitere Hilfsmittel dadurch gekennzeichnet, dass sie ein ethoxyliertes Stearyl-diphenyloxethyl-diethylentriamin in Kombination mit mindestens einem anionischen Dispergator aufweist.

Die Verbesserung des Heisslöseverhaltens der Formulierung in Wasser kann durch verschiedene Tests bestimmt werden. Diese sind beispielsweise

a) mittels eines Handtests durch Uebergiessen von 10 g Formulierung mit 100 ml Wasser von 80 bis 85°C und zweiminütigem Rühren mit dem Glasstab wobei die feste Formulierung beim Lösen in Wasser keine Klumpen bildet und nicht am Rührer klebt.

b) ein Mechanischer Test zur Beurteilung des Kalt-Dispergier- bzw. Lösevermögens = MKDL-Test indem beispielsweise das Kriterium für die effektive Wasserlöslichkeit als erfüllt angesehen wird, wenn sich 5 g feste Formulierung unter normierter mechanischer Einwirkung in 50 ml Wasser von 60°C innert 5 Minuten rückstandsfrei lösen lassen.

c) die Bestimmung der effektiven Löslichkeit, wobei die feste Formulierung z.B. 5 Minuten bei 60°C in Wasser belassen wird unter anschliessender Filtrierung, und

d) die Bestimmung der Löslichkeit, indem die feste Formulierung bei 90°C gelöst wird und dann filtriert wird, oder bei 90°C gelöst wird und auf 60°C bzw. 30°C abgekühlt und dann filtriert wird.

Die in den festen Formulierungen vorliegenden anionischen Farbstoffe können verschiedenen Farbstoffklassen angehören und eine oder mehrere Sulfonsäuregruppen und eine oder mehrere faserreaktive Gruppen enthalten. Insbesondere handelt es sich um Triphenylmethanfarbstoffe mit mindestens zwei Sulfonsäuregruppen, schwermetallfreie Monoazo- und Disazofarbstoffe mit je einer oder mehreren Sulfonsäuregruppen und gegebenenfalls einer oder mehreren faserreaktiven Gruppen und schwermetallhaltige, namentlich kupfer-, chrom-, nickel- oder kobalthaltige Monoazo-, Disazo-, Azomethin-und Formazanfarbstoffe, insbesondere metallisierte Farbstoffe, die an ein Metallatom zwei Moleküle Azofarbstoff oder ein Molekül Azofarbstoff und ein Molekül Azomethinfarbstoff gebunden enthalten, vor allem solche, die als Liganden Mono- und/oder Disazofarbstoffe und/oder Azomethinfarbstoffe und als zentrales Metallion ein Chrom- oder Kobaltion enthalten, wie auch Anthrachinonfarbstoffe, insbesondere 1-Amino-4-arylaminoanthrachinon-sulfonsäuren bzw. 1,4-Diarylamino- oder 1-Cycloalkylamino-4-arylaminoanthrachinon-sulfonsäuren. Unter faserreaktiven Gruppen sind solche Gruppen zu verstehen, die mit dem zu färbenden Polyamidmaterial oder Wolle eine kovalente Bindung eingehen.

Als anionische wasserlösliche Farbstoffe kommen vor allem Wollfarbstoffe in Betracht, wie sie z.B. in der EP-A-0089004 beschrieben sind. Die Menge der anionischen Farbstoffe in der festen Formulierung beträgt zwischen 20 und 80 Gew.-%, bezogen auf das Gesamtpräparat.

Vorzugsweise liegen die anionischen Farbstoffe in der Formulierung im rohen trockenen und gemahlenen Zustand vor. Unter "roh" sei hier und im folgenden verstanden, dass die Farbstoffe direkt aus der Synthese anfallen und keine Coupiermittel enthalten.

Bei den ethoxylierten Stearyl-diphenyloxethyl-diethylentriaminen handelt es sich vor allem um Verbindungen, die der Formel

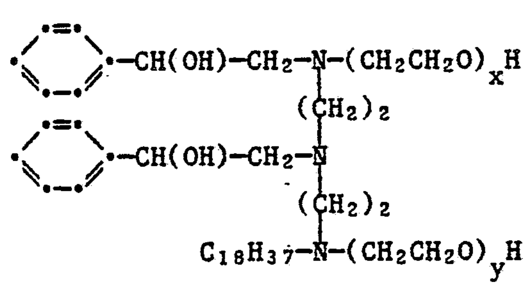

entsprechen, worin die Summe von x und y vor allem im Bereich von 80 bis 130, vorzugsweise 90 bis 110 liegen. Es handelt sich dabei um Verbindungen, die zum Teil bereits als Egalisiermittel für die saure Wollfärbung bekannt sind. Deren Anteil im Gesamtpräparat schwankt zwischen 5 und 15 Gew.-%, vorzugsweise 5 und 10 Gew.-%. Die bisher anstelle dieser ethoxylierten Stearyl-diphenyloxethyl-diethylen-triamine verwendeten Mittel wie anorganische Salze, Dextrin oder anionische Dispergatoren konnten eine starke Klumpenbildung nicht verhindern.

Als anionischer Dispergator, welcher erfindungsgemäss in der festen Formulierung einzeln oder im Gemisch mit anderen anionischen Dispergatoren vorliegt, kommen die üblichen Dispergiermittel für wasserlösliche Farbstoffe in Frage, so zum Beispiel die Kondensationsprodukte von aromatischen Sulfonsäuren mit Formaldehyd, wie das Alkalisalz, vor allem Natriumsalz des Formaldehyd-Kondensationsprodukts von Naphthalinsulfosäure. Besonders geeignet sind jedoch Alkali-Ligninsulfonate oder Alkali-Oxyligninsulfonate, beispielsweise die unter der Bezeichnung Sulfitablauge erhältlichen Verbindungen. Allgemein enthalten die erfindungsgemässen festen Formulierungen 5 bis 50 Gew.-%, vorzugsweise 5 bis 20 Gew.-%, an anionischem Dispergiermittel.

Eine bevorzugte Formulierung enthält, bezogen auf die Farbstofformulierung, 5 bis 10 Gew.-% eines ethoxylierten Stearyl-diphenyloxethyl-diethylentriamins und 5 bis 20 Gew.-% eines Natriumligninsulfonats.

Daneben können die festen Formulierungen noch ein oder mehrere Hilfsmittel enthalten, wie Salze, vor allem anorganischer Natur, Netzmittel, Staubbindemittel und insbesondere eine organische Säure, vorzugsweise Citronensäure, zur Einstellung des pH-Werts auf 4,5 bis 6,5.

Die festen Formulierungen werden hergestellt, indem man mindestens einen wasserlöslichen anionischen Farbstoff, und gegebenenfalls die weiteren Hilfsmittel mit einem ethoxylierten Stearyl-diphenyloxethyl-diäthylentriamin und mindestens einem anionischen Dispergator miteinander mischt. Dabei wird der rohe Farbstoff zunächst trocken gemahlen, bevor er mit dem Dispergator, dem ethoxylierten Stearyl-diphenyloxethyl-diethylentriamin und den weiteren Hilfsmitteln, vor allem der organischen Säure vermischt wird.

Die erfindungsgemässen festen Formulierungen zeichnen sich durch sehr gute Löseeigenschaften in Wasser aus und weisen dadurch vorteilhafte Eigenschaften auf. Sie finden Verwendung zur Herstellung von Färbebädern, Klotzflotten und Druckpasten. Diese eignen sich zum Färben und Bedrucken von Textilmaterial aus Wolle und Polyamid.

Die folgenden Beispiele erläutern die Erfindung, ohne sie darauf zu limitieren. Teile bedeuten, sofern nichts anderes angegeben ist, Gewichtsteile.

Beispiel 1:

Eine feste Formulierung, die sich zusammensetzt aus:
720 Teilen des Farbstoffs der Formel (A)

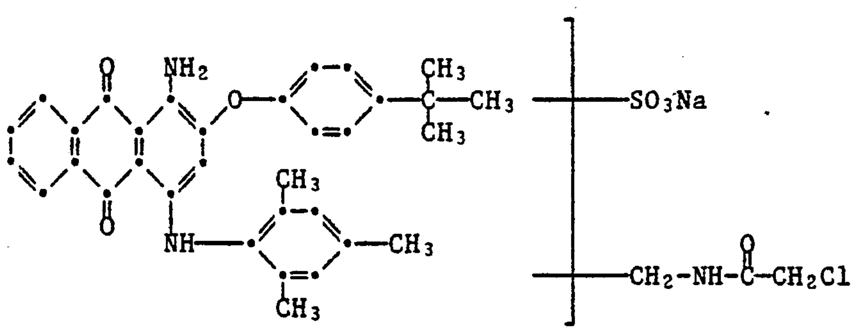

130 Teilen Natrium-Oxyligninsulfonat (B) als anionischem Dispergator und Coupage,
100 Teilen eines Produkts aus der Umsetzung von 1 Mol Stearyl-diphenyloxethyl-diethylentriamin mit 106 Mol Ethylenoxid (C),
10 Teilen Citronensäure (D),
20 Teilen des Natriumsalzes der 1-Benzyl-2-heptadecyl-benzimidazol-X,X-disulfosäure (E) als Netzmittel und
20 Teilen eines Staubbindemittels (F)
wird wie folgt erhalten:

Der rohe trockene anionische Farbstoff (A) wird zunächst in einer Mühle gemahlen, dann in einem Mischer mit den Verbindungen (B), (C), (D) und (E) während etwa 20 Minuten durchmischt und durch Aufdüsung mit dem Staubbindemittel (F) versetzt und erneut während etwa 20 Minuten durchmischt. Man erhält eine feste Formulierung, deren Löseverhalten wie Tabelle 1 zeigt in Wasser deutlich verbessert ist, gegenüber einer Formulierung, welche die Komponente (C) nicht enthält.

Tabelle 1

| Formulierung | "Heisslöseverhalten" | MKDL-Test bei 60 °C |
|---|---|---|
| • gemäss Beispiel 1 mit Komponente (C) | etwas Kleben am Glasstab | ca. 30 Min. |
| • gemäss Beispiel 1 ohne Komponente (C) | zähe Klumpen | nicht lösbar |

Beispiel 2:

Eine feste Formulierung, die sich zusammensetzt aus:
558 Gewichtsteilen des Farbstoffs der Formel ($A_1$)

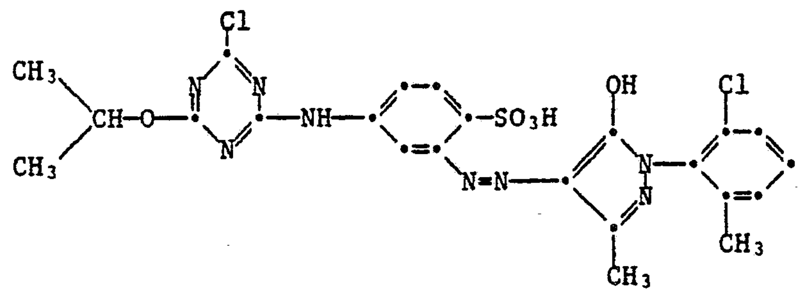

87 Gewichtsteilen des Farbstoffs der Formel ($A_2$)

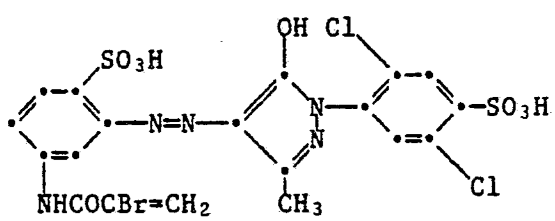

90 Gewichtsteilen des Natriumsalzes des Formaldehyd-Kondensationsprodukts von Naphthalinsulfosäure (B) als anionischen Dispergator und Coupage,
45 Gewichtsteilen Ligninsulfonat ("Sulfitablauge") (C) als anionischen Dispergator und Coupage,
100 Gewichtsteilen des Produkts aus der Umsetzung von 1 Mol Stearyl-diphenyloxyäthyldiethylentriamin mit 106 Molen Ethylenoxid (D),
40 Gewichtsteilen Aminoessigsäure (E) als Amphotensid zur Verbesserung der Anschlämmbarkeit,
30 Gewichtsteilen Natriumchlorid (F),
20 Gewichtsteilen des Natriumsalzes der 1-Benzyl-2-heptadecyl-benzimidazol-X,X-disulfosäure (G) als anionisches Tensid zur Erhöhung der Benetzungsgeschwindigkeit und
30 Gewichtsteilen eines Staubbindemittels (H)
und hergestellt wird analog den Angaben in Beispiel 1 besitzt gegenüber einer Formulierung, die die Komponente (D) nicht enthält bessere Löslichkeiten sowie ein besseres (Heiss)Löseverhalten in Wasser.

Tabelle 2

| Formulierung | Löslichkeit (g/l) | | | "Heisslöseverhalten" | MKDL-Test bei 60 °C | Effektive Löslichkeit (g/l) 5 Min./60 °C |
|---|---|---|---|---|---|---|
| | 90 °C | 90/60 °C | 90/30 °C | | | |
| • gemäss Beispiel 2 mit Komponente (D) | 100 | 100 | 100 | Lösung mit feindispergierten Anteilen (1,5 Min.) | 20 Min. | 80 |
| • gemäss Beispiel 2 ohne Komponente (D) | 80 | 50 | 50 | Klumpenbildung, Kleben am Glasstab (2 Min.) | > 20 Min. | 50 |

Beispiel 3:

Eine feste Formulierung, die sich zusammensetzt aus:
773 Gewichtsteilen des Farbstoffs der Formel (A)

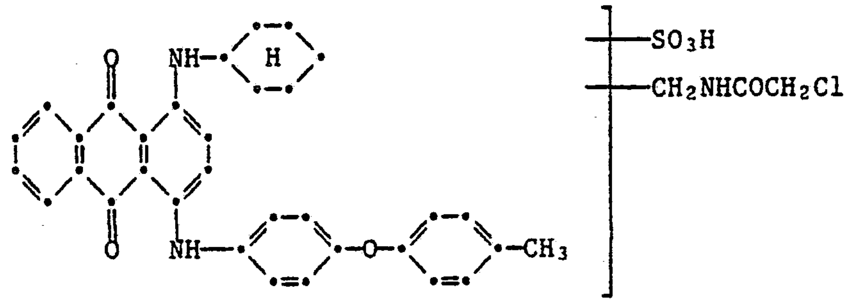

77 Gewichtsteilen des Natriumsalzes des Formaldehyd-Kondensationsprodukts von Naphthalinsulfosäure (B) (anionischer Dispergator und Coupage),
50 Gewichtsteilen des Produkts aus der Umsetzung von 1 Mol Stearyl-diphenyloxyäthyl-diäthylentriamin mit 106 Molen "Aethylenoxid (C),
80 Gewichtsteilen des Natriumsalzes von Isopropylbenzol-4-sulfosäure (D),
20 Gewichtsteilen eines Staubbindemittels (E)
und hergestellt wird analog den Angaben in Beispiel 1 zeigt gegenüber einer Formulierung, die die Komponente (C) nicht enthält, ein deutlich verbessertes Löseverhalten in Wasser.

Tabelle 3

| Formulierung | "Heisslöseverhalten" | MKDL-Test bei 60 °C |
|---|---|---|
| • gemäss Beispiel 3 mit Komponente (C)<br>• gemäss Beispiel 3 ohne Komponente (C) | etwas Kleben am Glasstab<br>zähe Klumpen | 15 Min.<br>nicht lösbar |

Beispiel 4:

Eine feste Formulierung, die sich zusammensetzt aus:
214 Gewichtsteilen des Farbstoffs der Formel ($A_1$)

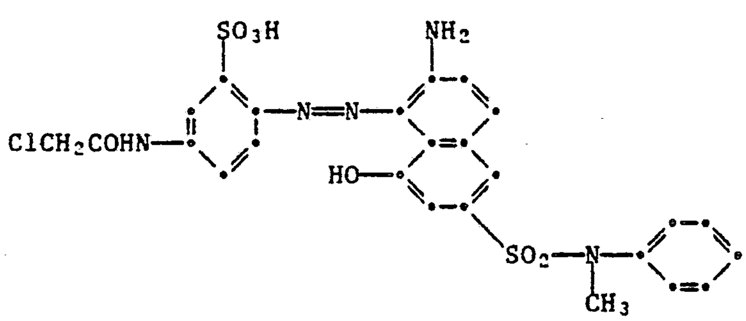

220 Gewichtsteilen des Farbstoffs der Formel ($A_2$)

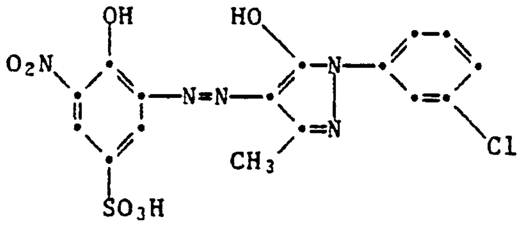 + 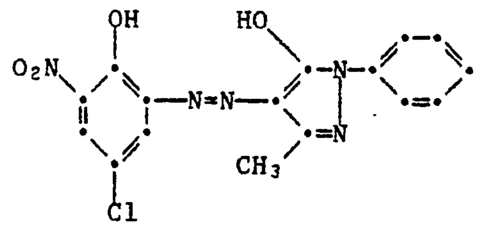

1:1 Cr-Komplex

416 Gewichtsteilen des Natriumsalzes des Formaldehyd-Kondensationsprodukts von Naphthalinsulfosäure (B),
100 Gewichtsteilen des Produkts aus der Umsetzung von 1 Mol Stearyl-diphenyloxyäthyldiäthylentriamin mit 106 Molen Aethylenoxid (C),
30 Gewichtsteilen des Natriumsalzes der 1-Benzyl-2-heptadecyl-benzimidazol-X,X-disulfosäure (D)
20 Gewichtsteilen eines Staubbindemittels (E)
und hergestellt wird analog den Angaben in Beispiel 1 weist gegenüber einer Formulierung, die die Komponente (C) nicht enthält, ein wesentlich verbessertes Heisslöseverhalten auf und besitzt zudem eine bessere Löslichkeit in Wasser.

Tabelle 4

| Formulierung | "Heisslöseverhalten" | Effektive Löslichkeit (g/l) 5 Min./60 °C |
|---|---|---|
| • gemäss Beispiel 4 mit Komponente (C) | Lösung mit feindispergierten Anteilen (2 Min.) | 50 |
| • gemäss Beispiel 4 ohne Komponente (C) | Klumpenbildung, Kleben am Glasstab (2 Min.) | 30 |

## Ansprüche

1. Feste Formulierung, enthaltend mindestens einen wasserlöslichen anionischen Farbstoff und gegebenenfalls weitere Hilfsmittel, dadurch gekennzeichnet, dass sie ein ethoxyliertes Stearyl-diphenyloxethyl-diethylentriamin in Kombination mit mindestens einem anionischen Dispergator aufweisen.

2. Feste Formulierung gemäss Anspruch 1, dadurch gekennzeichnet, dass sie als ethoxyliertes Stearyl-diphenyloxethyl-diethylentriamin ein solches der Formel

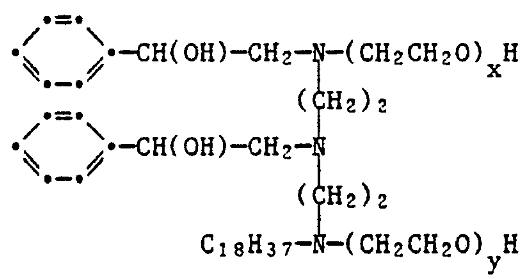

aufweist, worin die Summe von x und y im Bereich von 80 bis 130 liegt.

3. Feste Formulierung gemäss Anspruch 2, dadurch gekennzeichnet, dass sie, bezogen auf die Farbstofformulierung, 5 bis 15 Gew.-% des ethoxylierten Stearyl-diphenyloxethyl-diethylentriamins und 5 bis 50 Gew.-% des anionischen Dispergators aufweist.

4. Feste Formulierung gemäss Anspruch 1, dadurch gekennzeichnet, dass sie als anionischen Dispergator ein Alkali-Ligninsulfonat aufweist.

5. Feste Formulierung gemäss Anspruch 1, dadurch gekennzeichnet, dass sie als anionischen Dispergator ein Alkali-Oxyligninsulfonat aufweist.

6. Feste Formulierung gemäss Anspruch 1, dadurch gekennzeichnet, dass sie als anionischen Dispergator ein Alkalisalz des Formaldehyd-Kondensationsprodukts von Naphthalinsulfosäure aufweist.

7. Feste Formulierung gemäss Anspruch 1, dadurch gekennzeichnet, dass sie, bezogen auf die Farbstofformulierung, 5 bis 10 Gew.-% eines ethoxylierten Stearyl-diphenyloxethyl-diethylentriamins gemäss Anspruch 2 und 5 bis 20 Gew.-% eines Natriumligninsulfonats aufweist.

8. Verfahren zur Herstellung einer festen Formulierung gemäss Anspruch 1, dadurch gekennzeichnet, dass man mindestens einen wasserlöslichen anionischen Farbstoff, und gegebenenfalls weitere Hilfsmittel mit einem ethoxylierten Stearyl-diphenyloxethyl-diäthylentriamin und mindestens einem anionischen Dispergator miteinander mischt.

9. Verfahren gemäss Anspruch 8, dadurch gekennzeichnet, dass man als weiteres Hilfsmittel eine organische Säure, ein Salz, ein Netzmittel oder ein Staubbindemittel einmischt.

10. Verwendung der festen Formulierung gemäss Anspruch 1 zur Herstellung von wässrigen Färbebädern, Klotzflotten und Druckpasten zum Färben und Bedrucken von Textilmaterial.

11. Verwendung gemäss Anspruch 10 zum Färben und Bedrucken von Wolle- und Polyamidmaterialien.